# EUROPÄISCHE PATENTSCHRIFT

(11) **EP 4 431 877 B1**
(45) Veröffentlichungstag und Bekanntmachung des Hinweises auf die Patenterteilung: **07.05.2025**
(21) Anmeldenummer: 23162285.3
(22) Anmeldetag: 16.03.2023
(51) Int. Cl.: G01D 5/14, G01D 5/245

(54) **POSITIONSMESSEINRICHTUNG MIT PERMANENTMAGNETEN**
POSITION MEASURING DEVICE WITH PERMANENT MAGNETS
DISPOSITIF DE MESURE DE POSITION À AIMANTS PERMANENTS

(43) Veröffentlichungstag der Anmeldung: 18.09.2024
(73) Patentinhaber: Dr. Johannes Heidenhain GmbH, 83301 Traunreut (DE)
(72) Erfinder: HEUMANN, Martin, 83278 Traunstein (DE); SCHNEIDER, Johannes, 83278 Traunstein (DE)

(56) Entgegenhaltungen:
- EP-A2- 2 053 362
- DE-A1- 19 530 904
- US-A- 4 757 257
- US-A1- 2022 003 572

## Beschreibung

### GEBIET DER TECHNIK

Die Erfindung betrifft eine Positionsmesseinrichtung zur Messung einer relativen Winkel- oder Linearposition zwischen einem Detektions- und Skalenelement unter Verwendung von Permanentmagneten gemäß dem Anspruch 1.

### STAND DER TECHNIK

Aus der Patentschrift EP 2 053 362 A2 ist eine Positionsmesseinrichtung umfassend eine absolute und zwei inkrementelle Teilungsspuren bekannt. Mittels magnetoresistiver Sensoren wird die Bestimmung einer Positionsinformation ermöglicht, insbesondere unter Einsatz dreier gestapelter Vormagnetisierungselemente mit differenzierenden Polarisationsrichtungen. Nachteilhaft an der Positionsmesseinrichtung im Stand der Technik sind die höheren Material- und Montagekosten durch den Einsatz von drei Vormagnetisierungselementen.

### ZUSAMMENFASSUNG DER ERFINDUNG

Der Erfindung liegt die Aufgabe zugrunde eine Positionsmesseinrichtung zu schaffen, welche eine hohe Messgenauigkeit und eine wirtschaftliche Herstellung vereint.

Diese Aufgabe wird erfindungsgemäß durch die Merkmale des Anspruches 1 gelöst. Vorteilhafte Ausgestaltungen und Weiterbildungen sind in den jeweils abhängigen Ansprüchen angegeben.

Die erfindungsgemäße Positionsmesseinrichtung umfasst ein Detektionselement, etwa einen Abtastkopf einer Winkel- oder Längenmesseinrichtung, und ein relativ zum Detektionselement entlang einer ersten Richtung (x) bewegbares Skalenelement, beispielsweise eine magnetische Teilungstrommel oder Maßband einer Winkel- oder Längenmesseinrichtung. Das Skalenelement weist eine erste und eine zweite Teilungsspur auf, welche beide absolut ausgebildet sind, sowie eine dritte inkrementelle Teilungsspur, wobei die drei Teilungsspuren zueinander parallel und in einer zweiten Richtung (y) beabstandet verlaufen bzw. angeordnet sind. Das Detektionselement umfasst wenigstens ein erstes Sensorfeld, das versetzt in einer dritten Richtung (z) gegenüber der ersten Teilungsspur angeordnet ist, sodass ein dritter Luftspalt zwischen dem ersten Sensorfeld und der ersten Teilungsspur ausgebildet ist. Das Detektionselement umfasst ferner ein zweites Sensorfeld, das versetzt in der dritten Richtung (z) gegenüber der zweiten Teilungsspur angeordnet ist. Zwischen dem zweiten Sensorfeld und der zweiten Teilungsspur ist der dritte Luftspalt ausgebildet. Das Detektionselement umfasst noch ein drittes Sensorfeld, das versetzt in der dritten Richtung (z) gegenüber der dritten Teilungsspur angeordnet ist, sodass ebenfalls der dritte Luftspalt zwischen dem dritten Sensorfeld und der dritten Teilungsspur ausgebildet ist. Die magnetsensitiven Sensorfelder sind so ausgestaltet und angeordnet, dass wenigstens die dem jeweiligen Sensorfeld in der dritten Richtung (z) gegenüber liegende, magnetisch ausgebildete Teilungsspur abtastbar ist. Zusätzlich umfasst das Detektionselement einen ersten Permanentmagnet, etwa in Form eines quaderförmigen Stabmagneten. Der erste Permanentmagnet ist dabei gegenüber der ersten Teilungsspur und hierzu derart in der dritten Richtung (z) versetzt angeordnet, dass zwischen dem ersten Permanentmagnet und der ersten Teilungsspur das erste Sensorfeld angeordnet ist. Ein zweiter Luftspalt kann dabei zwischen dem ersten Sensorfeld und dem ersten Permanentmagnet ausgebildet sein. Ein zweiter Permanentmagnet, etwa in Form eines quaderförmigen Stabmagneten, ist gegenüber der zweiten Teilungsspur und hierzu in der dritten Richtung (z) versetzt angeordnet. Dabei ist der zweite Permanentmanget ebenfalls so in der dritten Richtung (z) versetzt angeordnet, dass das zweite Sensorfeld zwischen der zweiten Teilungsspur und dem zweiten Permanentmagneten liegt. Auch zwischen dem zweiten Sensorfeld und dem zweiten Permanentmagnet kann der zweite Luftspalt ausgebildet sein. Zusätzlich kann ein erster Luftspalt in der zweiten Richtung (y) zwischen dem ersten und zweiten Permanentmagnet ausgebildet sein.

Die Sensorfelder sind also in einer dritten Richtung (z) versetzt zur jeweilig abzutastenden Teilungsspur angeordnet und zur jeweilig abzutastenden Teilungsspur gegenüber liegend angeordnet.

Die erste und die zweite Teilungsspur sind absolut ausgebildet, das heißt, dass durch das Detektionselement immer der aktuelle absolute Positionswert bestimmt wird, sobald die Positionsmesseinrichtung in Betrieb ist. Zudem wird durch das Detektionselement die dritte inkrementelle Teilungsspur abgetastet, wobei hierdurch eine vergleichsweise feine Inkrementalposition bestimmt wird. Zur Erhöhung der Auflösung beziehungsweise der Messgenauigkeit wird der absolute Positionswert mit der Inkrementalposition verknüpft. Die drei Teilungsspuren verlaufen zueinander parallel entlang der ersten Richtung (x) und sind in einer zweiten Richtung (y) beabstandet zueinander angeordnet.

Auf diese Weise erreicht die erfindungsgemäße Positionsmesseinrichtung eine hohe Messgenauigkeit, insbesondere durch die Minimierung von Messabweichungen wie beispielsweise Interpolations- oder Umkehrfehlern.

Unter einem Luftspalt ist der Raum bzw. Abstand zu verstehen, der zwischen zwei gegenüberliegenden Flächen eingenommen wird, welche einen magnetischen Fluss führen können. Der Luftspalt kann dabei neben Luft auch jeden anderen Feststoff bzw. jedes andere Gas, Gasgemisch oder Kombinationen hiervon aufweisen, welche annähernd nicht ferromagnetisch wechselwirken, z.B. auch eine Aluminiumlegierung. Der erste, zweite und dritte Luftspalt können hierbei auch aus unterschiedlichen Materialien bestehen. So können beispielsweise der erste Luftspalt und der zweite Luftspalt aus einer Aluminiumlegierung und der dritte Luftspalt aus Luft bestehen.

Die in der erfindungsgemäßen Positionsmesseinrichtung eingesetzten Sensorfelder sind als magnetsensitive Strukturen ausgebildet, welche auf ein und demselben flächigen Substrat (beispielsweise einem Glassubstrat) aufgebracht sind. Alternativ kann für jedes Sensorfeld ein eigenes flächiges Substrat vorgesehen sein. Diese Sensorfelder können aus mehreren ferromagnetischen Metallstreifen bestehen, beispielsweise aus Permalloy. Die Magnetfelder des Skalenelements beeinflussen die Magnetisierung der Metallstreifen, wodurch sich der elektrische Widerstand ändert (magnetoresistiver Effekt). Diese positionsabhängigen Widerstandswerte werden nach einer elektronischen Verarbeitung der durch die Sensorfelder generierten Sensorsignale in einer Auswerteelektronik als Positionsinformation ausgegeben.

Durch das Magnetfeld B der beiden Permanentmagnete erfahren die Sensorfelder eine definierte Vormagnetisierung, welche der Ausbildung von magnetischen Domänen in den Metallstreifen entgegenwirkt.

Bei dem hier beschriebenen Koordinatensystem handelt es sich um ein kartesisches Koordinatensystem, d. h. die erste Richtung (x) ist orthogonal zur zweiten Richtung (y) und die dritte Richtung (z) ist wiederum orthogonal zu den anderen beiden Richtungen (x und y) orientiert.

Gemäß einer vorteilhaften Weiterbildung der Erfindung kann die dritte Teilungsspur bezogen auf die zweite Richtung (y) zwischen der ersten Teilungsspur und der zweiten Teilungsspur angeordnet sein. Vorteilhaft hierbei ist, dass die beiden Permanentmagnete, welche gegenüber der ersten und zweiten Teilungsspur in der dritten Richtung (z) versetzt angeordnet sind, eine Vormagnetisierung hinsichtlich aller im Detektionselement eingesetzten Sensorfelder ausüben können. Ein zusätzlicher Permanentmagnet über der dritten Teilungsspur bzw. dem dritten Sensorfeld wird nicht benötigt.

Das Skalenelement ist erfinderungsgemäß durch ein Verfahren ausgebildet, bei dem ein magnetisches Material in oder auf die Oberfläche eines Trägerelements, beispielsweise ein metallenes Trägerelement mit einer rechteckigen Querschnittsform, ein- oder aufgebracht wird. Danach können die Teilungsspuren durch lokales Magnetisieren nach einem vorgegebenen exakten Muster erzeugt werden.

Mit Vorteil ist die Positionsmesseinrichtung so konfiguriert, dass die Magnetisierungsrichtung der beiden Permanentmagnete identisch ist, was zur Ausbildung eines Magnetfelds mit homogener Komponente in wenigstens einer Ebene der ersten und zweiten Richtung (x,y-Ebenen) über und/oder unter und/oder zwischen den beiden Permanentmagneten führen kann, beispielsweise mit einem Versatz der Permanentmagnete in der zweiten Richtung (y).

Die Magnetisierungsrichtung der beiden Permanentmagnete kann dabei so ausgestaltet sein, dass sich der Nordpol des ersten Permanentmagneten und der Südpol des zweiten Permanentmagneten gegenüber liegen. Alternativ können sich auch der Südpol des ersten Permanentmagneten und der Nordpol des zweiten Permanentmagneten gegenüber liegen.

Unter einem homogenen Bereich ist wenigstens ein Teilbereich eines Magnetfelds zu verstehen, bei dem die Feldlinien in wenigstens einer Ebene (beispielsweise der x,y-Ebene) allesamt parallel und in dieselbe Richtung (beispielsweise in y-Richtung) verlaufen.

Alternativ und gemäß einer dritten Ausführungsform kann das dritte Sensorfeld so angeordnet sein, dass dieses zwar noch in einem homogenen Bereich des Magnetfelds B zwischen dem ersten und zweiten Permanentmagneten liegt, jedoch ohne dabei in einer Ebene (x,y-Ebene) mit den ersten und zweiten Sensorfeldern zu liegen.

Die beiden Permanentmagnete können zueinander parallel angeordnet sein, sodass die Polausrichtung der Permanentmagnete (Richtung der Verbindungslinie zwischen Nord- und Südpol) jeweils eine Richtungskomponente senkrecht zur Messrichtung (x-Richtung) aufweist. Insbesondere können die Längskanten der beiden Permanentmagnete entlang der Messrichtung (x-Richtung) verlaufen. Auch die Sensorfelder können zueinander parallel in Messrichtung (x-Richtung) angeordnet sein, sodass deren Längskanten entlang der Messrichtung (x-Richtung) verlaufen. Vorteilhafterweise verlaufen darüber hinaus die Nebenkanten, welche die Höhe der Permanentmagnete bzw. Sensorfelder definieren, parallel zur dritten Richtung (z). Die Nebenkanten, welche die Breite der Permanentmagnete bzw. Sensorfelder definieren, können parallel zur zweiten Richtung (y) verlaufen.

In weiterer Ausgestaltung kann der erste Permanentmagnet derart zur ersten Teilungsspur in der dritten Richtung (z) versetzt angeordnet sein, dass das erste Sensorfeld bezogen auf die dritte Richtung (z) zwischen der ersten Teilungsspur und dem ersten Permanentmagnet liegt. Ergänzend oder alternativ kann der zweite Permanentmagnet derart zur zweiten Teilungsspur in der dritten Richtung (z) versetzt angeordnet sein, dass das zweite Sensorfeld bezogen auf die dritte Richtung (z) zwischen der ersten Teilungsspur und dem zweiten Permanentmagnet liegt. Mit Vorteil liegt dabei je ein Permanentmagnet mittig über je einem Sensorfeld.

Gemäß einer weiteren Ausgestaltung kann zwischen dem ersten Permanentmagnet und dem ersten Sensorfeld in der dritten Richtung (z) ein zweiter Luftspalt ausgebildet sein. Ergänzend oder alternativ kann zwischen dem zweiten Permanentmagnet und dem zweiten Sensorfeld in der dritten Richtung (z) ein zweiter Luftspalt ausgebildet sein. Der erste Permanentmagnet und der zweite Permanentmagnet können dabei in einer Ebene (x,y-Ebene) liegen. Auch das erste Sensorfeld und das zweite Sensorfeld können in einer weiteren Ebene (x,y-Ebene) liegen, sodass der zweite Luftspalt in der dritten Richtung (z) identisch zwischen dem ersten Sensorfeld und dem ersten Permanentmagnet sowie zwischen dem zweiten Sensorfeld und dem zweiten Permanentmagnet ausgebildet ist.

In einer weiteren Ausführung der Erfindung kann der erste Permanentmagnet auf der Rückseite des Substrats über dem ersten Sensorfeld angeordnet sein. Analog kann der zweite Permanentmagnet auf der Rückseite des Substrats über dem zweiten Sensorfeld angeordnet sein. Bei dieser Ausführungsform befindet sich somit kein zweiter Luftspalt zwischen dem Substrat des ersten Sensorfelds und dem ersten Permanentmagnet und ergänzend oder alternativ zwischen dem Substrat des zweiten Sensors und dem zweiten Permanentmagnet. Zwischen einem Permanentmagnet und dem Substrat kann dennoch eine lösbare oder feste Verbindung vorgesehen sein, beispielsweise eine Klebeverbindung.

Unter der Rückseite des Substrats ist hierbei der Teil der Substratoberfläche zu verstehen, welcher der Fläche in der dritten Richtung (z) gegenüber liegt, die den Teilungsspuren zugewandt ist.

In weiterer Ausgestaltung der Erfindung kann wenigstens einer der beiden Permanentmagnete als Stabmagnet ausgebildet sein. Im Falle eines Permanentmagneten mit rechteckigem Querschnitt können die Längskanten die Länge X_{PM} definieren und die Nebenkanten die Breite Y_{PM} sowie die Höhe Z_{PM}.

Ein Permanentmagnet ist ein Magnet aus einem halbhart- oder hartmagnetischen Material, beispielsweise aus einer Legierung aus Eisen, Cobalt, Nickel oder bestimmten Ferriten. Das Magnetfeld eines Permanentmagneten ist ein statisches Magnetfeld. Ein Permanentmagnet besitzt an seiner Oberfläche einen oder mehrere Nord- und Südpole.

Analog zu den Permanentmagneten können auch die Sensorfelder näherungsweise als Quader beschrieben werden, wobei die Längskanten die Länge X_{S} und die Nebenkanten die Breite Y_{S} sowie die Höhe Z_{S} definieren. Hierbei gilt Z_{S} « X_{S} und Z_{S} « Y_{S}.

In weiterer Ausgestaltung der Erfindung können die beiden Permanentmagnete derart in Länge, Breite und Höhe dimensioniert sein, und alternativ oder ergänzend der erste Luftspalt derart in der zweiten Richtung (y) dimensioniert sein und alternativ oder ergänzend der zweite Luftspalt derart in der dritten Richtung (z) dimensioniert sein, dass wenigstens im Bereich der Sensorfelder das Magnetfeld homogene Bereiche wenigstens in einer Ebene der ersten und zweiten Richtung (x,y-Ebene) ausbildet. Hierbei ist von Vorteil, dass die homogenen Bereiche des Magnetfelds zu einer Vormagnetisierung der Sensorfelder in Richtung der zweiten Richtung führen können, was der Ausbildung magnetischer Domänen in den Metallstreifen der Sensorfelder entgegenwirkt.

Als Stellgrößen für die Beeinflussung der lokalen Lage der homogenen Bereiche können u.a. die Geometrien der einzelnen Permanentmagnete, die Wahl des Energieprodukts der einzelnen Permanentmagnete sowie der erste und ergänzend oder alternativ der zweite Luftspalt verwendet werden.

In weiterer Ausgestaltung der Erfindung kann der erste Permanentmagnet insbesondere in der ersten Richtung (x) und ergänzend oder alternativ in der zweiten Richtung (y) so dimensioniert sein, dass dieser über die Abmessungen des ersten Sensorfelds ragt. Analog hierzu kann ergänzend oder alternativ der zweite Permanentmagnet insbesondere in der ersten Richtung (x) und in der zweiten Richtung (y) so dimensioniert sein, dass dieser über die Abmessungen des zweiten Sensorfelds ragt.

Unter den Abmessungen eines Sensorfelds sind jene Kanten zu verstehen, welche die Länge und Breite des Sensorfelds definieren. Andernfalls ist/sind damit die Kante(n) der orthogonalen Projektion (in der dritten Richtung z) der Sensorfeldfläche auf die Ebene (x,y-Ebene), in der der Permanentmagnet liegt, gemeint.

In weiterer Ausgestaltung kann der erste Permanentmagnet so dimensioniert sein, dass nur dessen Abmessung in der zweiten Richtung (y) größer als die Abmessungen des ersten Sensorfelds in der zweiten Richtung (y) ist. Analog kann auch oder nur der zweite Permanentmagnet so dimensioniert sein, dass nur dessen Abmessung in der zweiten Richtung (y) größer als die Abmessungen des zweiten Sensorfelds in der zweiten Richtung (y) ist.

Gemäß einer weiteren Ausgestaltung können die beiden Permanentmagnete geometrisch identisch ausgebildet sein, d. h. die Bauform, die Querschnittsform sowie die Kantenlänge des ersten Permanentmagneten und des zweiten Permanentmagneten gleichen sich.

Gemäß einer weiteren Ausgestaltung der Erfindung können die beiden Permanentmagnete ein identisches Energieprodukt besitzen, d. h. das Energieprodukt des ersten Permanentmagneten und das Energieprodukt des zweiten Permanentmagneten besitzen den gleichen Betrag.

Das Energieprodukt eines Permanentmagneten ist das maximale Produkt aus magnetischer Flussdichte und magnetischer Feldstärke, welches zeitgleich im Material eines Permanentmagneten vorliegen kann.

In weiterer Ausgestaltung der Erfindung ist die Abmessung des ersten Luftspalts in der zweiten Richtung (y) derart dimensioniert, dass dieser wenigstens der Abmessung des dritten Sensorfelds in der zweiten Richtung (y) entspricht.

In weiterer Ausgestaltung der Erfindung kann das Skalenelement wenigstens eine weitere Teilungsspur aufweisen, welche inkrementell ausgebildet ist. Die weitere Teilungsspur kann ebenfalls zwischen der ersten und zweiten Teilungsspur angeordnet sein, sodass die erste, zweite, dritte und die weitere Teilungsspur parallel und in einer zweiten Richtung (y) beabstandet angeordnet sind. Auch gegenüber der weiteren Teilungsspur kann in der dritten Richtung (z) wenigstens ein weiteres Sensorfeld angeordnet sein. Die Sensorfelder im Detektionselement sind dabei so ausgestaltet, dass durch diese die Teilungsspuren abtastbar sind. Der erste Permanentmagnet ist dabei derart zur ersten Teilungsspur in der dritten Richtung (z) versetzt angeordnet, dass das erste Sensorfeld zwischen der ersten Teilungsspur und dem ersten Permanentmagnet liegt. Ergänzend oder alternativ ist der zweite Permanentmagnet derart zur zweiten Teilungsspur in der dritten Richtung (z) versetzt angeordnet, dass das zweite Sensorfeld zwischen der ersten Teilungsspur und dem zweiten Permanentmagnet liegt. Das Magnetfeld zwischen dem ersten und zweiten Permanentmagneten ist dabei so ausgebildet, dass wenigstens das dritte Sensorfeld sowie das weitere Sensorfeld in einem Bereich des Magnetfelds mit homogenen Feldlinienkomponenten bezüglich wenigstens einer Ebene der ersten und zweiten Richtung (x,y-Ebenen) liegen und von dem ausgebildeten Magnetfeld durchsetzt werden können. Dabei können das erste Sensorfeld, das zweite Sensorfeld, das dritte Sensorfeld und das weitere Sensorfeld in einer Ebene (x,y-Ebene) liegen. Alternativ liegen das erste und zweite Sensorfeld in einer ersten Ebene (x,y-Ebene) sowie das dritte und weitere Sensorfeld in einer zweiten Ebene (x,y-Ebene). Hierbei unterscheidet sich die erste von der zweiten Ebene hinsichtlich ihrer Lage in der dritten Richtung (z).

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

### KURZE BESCHREIBUNG DER ZEICHNUNGEN

- Fig. 1: eine Seitenansicht einer Positionsmesseinrichtung in Ausgestaltung als Winkelmesseinrichtung;
- Fig. 2: eine Schnittansicht der Positionsmesseinrichtung gemäß einem ersten Ausführungsbeispiel;
- Fig. 3: eine Draufsicht auf ein Skalenelement;
- Figs. 4a, 4b: Darstellung der Magnetisierungsrichtungen der Permanentmagnete mit schematischer Kennzeichnung des Magnetfelds;
- Fig. 5: eine Draufsicht auf eine Positionsmesseinrichtung gemäß dem ersten Ausführungsbeispiel;
- Fig. 6: eine Vorderansicht auf das Detektionselement gemäß dem ersten Ausführungsbeispiel;
- Fig. 7a: eine perspektivische Ansicht des ersten Permanentmagneten;
- Fig. 7b: eine perspektivische Ansicht des ersten Sensorfelds in vereinfachter Darstellung;
- Fig. 8: eine Draufsicht auf eine Positionsmesseinrichtung gemäß einem zweiten Ausführungsbeispiel;
- Figur 9: eine Schnittansicht einer Positionsmesseinrichtung gemäß einer dritten Ausführungsform.

### BESCHREIBUNG DER AUSFÜHRUNGSFORMEN

Einige spezifische Ausführungsformen der vorliegenden Erfindung werden im Folgenden unter Bezugnahme der Zeichnungen genauer beschrieben.

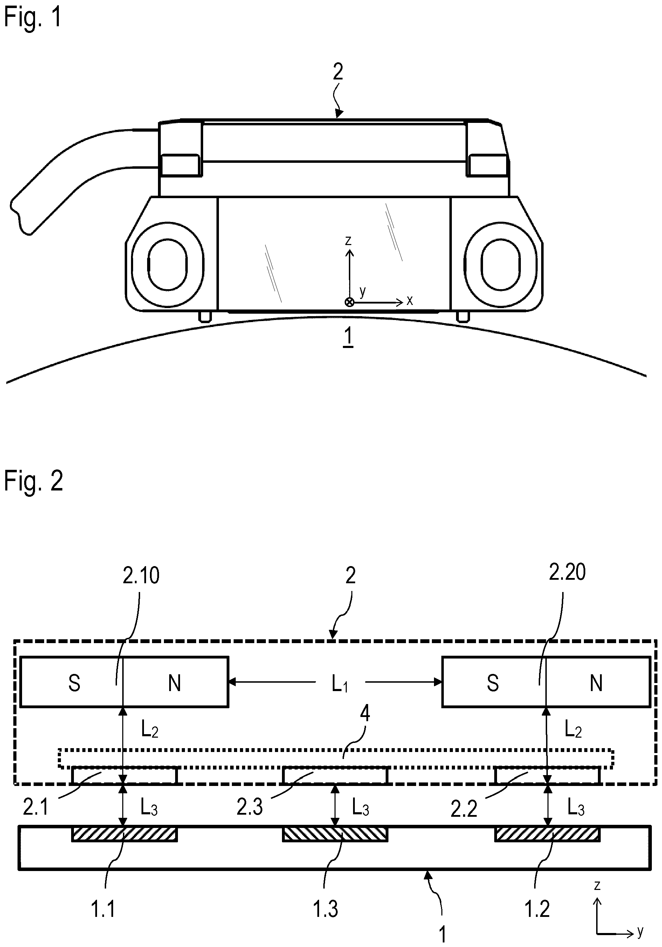

Dabei zeigt Fig. 1 eine erfindungsgemäße Positionsmesseinrichtung, ausgestaltet als Winkelmesseinrichtung, umfassend ein Skalenelement 1 und ein Detektionselement 2. Die beiden Hauptkomponenten der Positionsmesseinrichtung (Skalenelement 1 und Detektionselement 2) sind in einer dritten Richtung z beabstandet angeordnet und beispielsweise mechanisch mit zwei Maschinenelementen gekoppelt, die sich relativ zueinander rotatorisch entlang einer ersten Richtung x bewegen können, wobei deren Relativ- oder Absolutposition (Winkelposition oder lineare Position) erfasst wird.

Gemäß einer ersten Ausführungsform in Fig. 2 umfasst die Positionsmesseinrichtung ein Skalenelement 1 mit einer ersten Teilungsspur 1.1, einer zweiten Teilungsspur 1.2 und einer dritten Teilungsspur 1.3. Außerdem umfasst die Positionsmesseinrichtung ein Detektionselement 2, welches wenigstens ein erstes Sensorfeld 2.1, wengistens ein zweites Sensorfeld 2.2 und wenigstens ein drittes Sensorfeld 2.3 umfasst. Die Sensorfelder 2.1, 2.2, 2.3 können als magnetsensitive Strukturen ausgebildet sein, welche auf ein und dem selben flächigen Substrat 4 (beispielsweise einem Glassubstrat) aufgebracht sind. Darüberhinaus umfasst das Detektionselement 2 einen ersten Permanentmagnet 2.10 und einen zweiten Permanentmagnet 2.20 sowie eine nicht dargestellte Auswerteelektronik.

Im vorgestellten Ausführungsbeispiel funktionieren die drei Sensorfelder 2.1, 2.2, 2.3 nach dem magnetoresisitven Prinzip, wobei eine für Magnetfelder sensitive Schicht dem Skalenelement 1 zugewandt ist. Die drei Sensorfelder 2.1, 2.2, 2.3 sind in der dritten Richtung z gegenüber den Teilungsspuren 1.1, 1.2, 1.3 versetzt angeordnet, sodass ein dritter Luftspalt L₃ ausgebildet wird. Mit Vorteil sind bei einem linear ausgebildeten Skalenelement 1 die Sensorfelder 2.1, 2.2, 2.3 so angeordnet, dass der dritte Luftspalt L₃ über die Fläche der magnetsensitiven Schicht hinweg mit annähernd konstanter Abmessung in der dritten Richtung z ausgebildet ist. Im Falle eines trommelförmigen Skalenelements 1 können die Abmessungen des dritten Luftspalts L₃ zwischen den einzelnen Sensorflächen und den darunter liegenden Teilungsspuren variieren.

Der erste Permanentmagnet 2.10 ist gegenüber der ersten Teilungsspur 1.1 in der dritten Richtung z versetzt angeordnet, sodass dieser gegenüber der Rückseite des Substrats 4 im Bereich des ersten Sensorfelds 2.1 angeordnet ist. Hierbei kann ein zweiter Luftspalt L₂ zwischen dem ersten Sensorfeld 2.1 und dem ersten Permanentmagneten 2.10 ausgebildet sein. Analog hierzu ist der zweite Permanentmagnet 2.20 gegenüber der zweiten Teilungsspur 1.2 in der dritten Richtung z versetzt angeordnet, sodass dieser der Rückseite des zweiten Sensorfelds 2.2 gegenüber angeordnet ist. Auch zwischen dem zweiten Sensorfeld 2.2 und dem zweiten Permanentmagnet 2.20 kann der zweite Luftspalt L₂ ausgebildet sein. Zwischen dem ersten Permanentmagnet 2.10 und dem zweiten Permanentmagnet befindet sich in der zweiten Richtung y ein erster Luftspalt L₁.

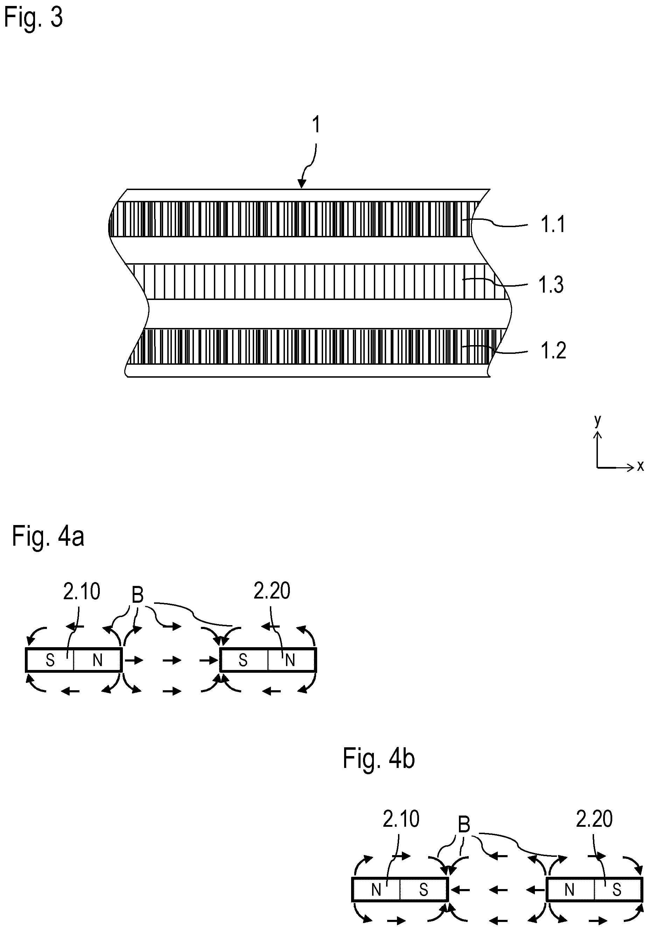

Wie Fig. 3 entnommen werden kann, umfasst das Skalenelement 1 gemäß einer ersten erfindungsgemäßen Ausführungsform drei Teilungsspuren 1.1, 1.2, 1.3., wovon zwei absolut und eine inkrementell ausgebildet sind. Das Skalenelement 1 ist mit Vorteil so gestaltet, dass die dritte Teilungsspur 1.3 zwischen der ersten Teilungsspur 1.1 und der zweiten Teilungsspur angeordnet ist. Die erste und zweite Teilungsspur 1.1, 1.2 des Skalenelements 1 besitzen jeweils wenigstens eine absolute magnetische Code-Teilung, welche beispielsweise so ausgebildet sein kann, dass diese in nicht regelmäßigen Abständen Gebiete mit magnetischem Nordpol und Gebiete mit magnetischem Südpol aufweist, welche einzeln oder kombiniert eine vordefinierte Positioneninformation bilden, z.B. in Form einer Pseudozufallsfolge. Die dritte Teilungsspur 1.3 des Skalenelements 1 besitzt wenigstens eine relativ feine inkrementelle magnetische Code-Teilung, welche beispielsweise mittels alternierender Nord- und Süd-Pole in regelmäßigen Abständen zueinander ausgebildet sein kann.

Die Code-Teilungen der Teilungsspuren 1.1, 1.2, 1.3 in Fig. 3 sind vereinfacht und daher lediglich schmatisch dargestellt.

Die Figuren 4a, 4b zeigen die Magnetisierungsrichtungen der Permanentmagnete 2.10, 2.20 der erfindungsgemäßen Positionsmesseinrichtung. Die Permanentmagnete 2.10, 2.20 sind dabei so angeordnet, dass die Magnetisierungsrichtung der beiden Permanentmagnete identisch ist und sich das resultierende Magnetfeld B wenigstens in Teilbereichen mit einer homogenen Komponente bezüglich wenigstens einer Ebene der ersten und zweiten Richtung (x,y-Ebenen) und in der zweiten Richtung (y-Richtung) ausbildet. D. h., dass entweder die Polseite mit Norden N des ersten Permanentmagneten 2.10 gegenüber der Polseite mit Süden S des zweiten Permanentmagneten 2.20 liegt (siehe Fig. 4a) oder dass die Polseite mit Süden S des ersten Permanentmagneten 2.10 gegenüber der Polseite mit Norden N des zweiten Permanentmagneten 2.20 angeordnet ist (siehe Fig. 4b).

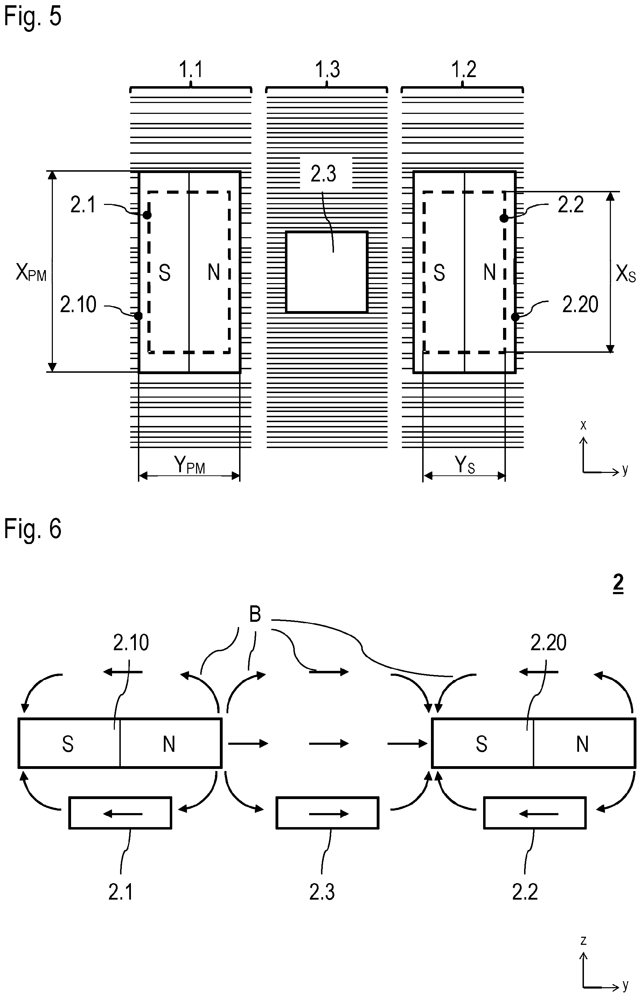

Fig. 5 zeigt die erfindungsgemäße Positionsmesseinrichtung gemäß dem ersten Ausführungsbeispiel in der Draufsicht. Dabei ist der erste Permanentmagnet 2.10 mittig in der ersten Richtung x und mittig in der zweiten Richtung y bezüglich dem ersten Sensorfeld 2.1 (gestrichelt dargestellt) angeordnet und der zweite Permanentmagnet 2.20 ist analog hierzu ebenfalls mittig in der ersten Richtung x und mittig in der zweiten Richtung y bezüglich dem zweiten Sensorfeld 2.2 (gestrichelt dargestellt) angeordnet.

Die beiden Permanentmagnete 2.10, 2.20 sind dabei so dimensioniert, dass sie über die Sensorfelder 2.1, 2.2 ragen, d. h. insbesondere die Außenabmessungen der Permanentmagnete 2.10, 2.20 in Länge X_{PM} und Breite Y_{PM} sind größer als die Länge X_{S} und Breite Y_{S} der darunter liegenden Sensorfelder 2.1, 2.2. Alternativ können die beiden Permanentmagnete 2.10, 2.20 so ausgestaltet sein, dass nur eine der Abmessungen (Länge X_{PM}, Breite Y_{PM}) größer als die entsprechende Abmessung des darunter angeordneten Sensorfelds (Länge X_{S}, Breite Y_{S}) ist. Die verbleibende Abmessung kann entweder identisch oder kleiner sein, als dies bei dem darunter angeordneten Sensorfeld der **Fall** ist.

Die beiden Permanentmagnete 2.10, 2.20 sowie die darunter angeordneten Sensorfelder 2.1, 2.2, 2.3 sind so ausgerichtet, dass deren Längskanten (Länge X_{PM} bzw. X_{S}) entlang der ersten Richtung x parallel und die Nebenkanten (Höhe Z_{PM} bzw. Z_{S}) parallel zur dritten Richtung z verlaufen.

Die Code-Teilungen der Teilungsspuren 1.1, 1.2, 1.3 in Fig. 5 sind vereinfacht und daher lediglich schmatisch dargestellt.

Wie in Fig. 6 schematisch dargestellt, bildet sich zwischen dem ersten und zweiten Permanentmagnet 2.10, 2.20 ein Magnetfeld B mit charakteristischen Feldlinienverläufen aus, angedeutet durch Magnetfeldvektoren. Insbesondere über, unter und zwischen den beiden Permanentmagneten bildet das Magnetfeld näherungsweise homogene Bereiche in wenigstens einer Ebene der ersten und zweiten Richtung (x,y-Ebenen) aus, gekennzeichnet durch Magnetfeldvektoren mit Verlauf in die zweite Richtung y. Die Sensorfelder 2.1, 2.2, 2.3 sind dabei mit Vorteil relativ so zu den Permanentmagneten angeordnet, dass diese im Wirkbereich des Magnetfelds B liegen.

Gemäß der ersten Ausführungsform ist der erste Permanentmagnet 2.10 in der dritten Richtung z versetzt zu dem ersten Sensorfeld 2.1 angeordnet, sodass dieser in einem Bereich wenigstens einer Ebene der ersten und zweiten Richtung (x,y-Ebenen) des Magnetfelds B mit näherungsweise homogenem Feldlinienverlauf mit Richtungsvektor in die zweite Richtung y (y-Richtung) liegt. Analog hierzu ist der zweite Permanentmagnet 2.20 in der dritten Richtung z versetzt zu dem zweiten Sensorfeld 2.2 angeordnet, sodass dieser ebenso in einem Bereich wenigstens einer Ebene der ersten und zweiten Richtung (x,y-Ebenen) des Magnetfelds B mit näherungsweise homogenem Feldlinienverlauf mit Richtungsvektor in die zweite Richtung y (y-Richtung) liegt. Das dritte Sensorfeld 2.3 ist dabei so angeordnet, dass dieses in einer Ebene mit dem ersten und zweiten Sensorfeld 2.1, 2.2 sowie zwischen diesen angeordnet ist, sodass dieses ebenso in einem Bereich wenigstens einer Ebene der ersten und zweiten Richtung x, y (x,y-Ebenen) des Magnetfelds B mit näherungsweise homogenem Feldlinienverlauf mit Richtungsvektor in die zweite Richtung y (y-Richtung) liegt. Als Stellgrößen für die Beeinflussung der lokalen Lage der homogenen Bereiche können u.a. die Geometrien der einzelnen Permanentmagnete 2.10, 2,20, die Wahl des Energieprodukts der einzelnen Permanentmagnete 2.10, 2,20 sowie der erste Luftspalt L₁ und ergänzend oder alternativ der zweite Luftspalt L₂ verwendet werden.

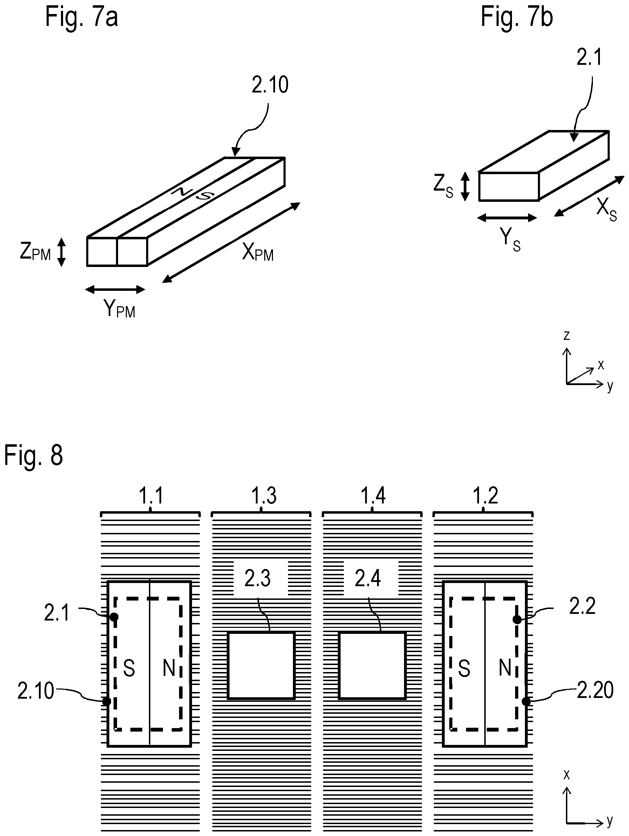

Wie Fig. 7a entnommen werden kann, kann der erste Permanentmagnet 2.10 als Stabmagnet mit rechteckigem Querschnitt ausgeformt sein, wobei die Längskanten die Länge X_{PM} definieren und die Nebenkanten die Breite Y_{PM} sowie die Höhe Z_{PM}. Analog kann der zweite Permanentmagnet 2.20 identisch zum ersten Permanentmagnet 2.10 ausgestaltet sein, wobei die Längskanten ebenfalls die Länge X_{PM} und die Nebenkanten die Breite Y_{PM} sowie die Höhe Z_{PM} des zweiten Permanentmagneten 2.20 definieren.

Die Sensorfelder 1.1, 1.2, 1.3 können gemäß der Figur 7b näherungsweise als Quader beschrieben werden, wobei die Längskanten die Länge X_{S} und die Nebenkanten die Breite Y_{S} sowie die Höhe Z_{S} definieren. Hierbei gilt Z_{S} « X_{S} und Z_{S} « Y_{S}.

Fig. 8 zeigt eine zweite Ausführungsform der erfindungsgemäßen Positionsmesseinrichtung, welche zwischen der ersten Teilungsspur 1.1 und der zweiten Teilungsspur 1.2 sowie neben der dritten Teilungsspur 1.3 noch wenigstens eine weitere Teilungsspur 1.4 vorsieht, welche inkrementell ausgebildet ist und wobei in der dritten Richtung z gegenüber der wenigstens einen weiteren Teilungsspur 1.4 wenigstens ein weiteres Sensorfeld 2.4 angeordnet ist. Das Magnetfeld B zwischen dem ersten und zweiten Permanentmagneten 2.10, 2.20 ist dabei so ausgebildet, dass sowohl das dritte Sensorfeld 2.3 als auch das weitere Sensorfeld 2.4 in einem Bereich wenigstens einer Ebene der ersten und zweiten Richtung x, y (x,y-Ebenen) des Magnetfelds B mit homogenem Feldlinienverlauf mit Richtungsvektor in die zweite Richtung y (y-Richtung) liegt und von dem ausgebildeten Magnetfeld B durchsetzt werden kann. Dabei können das erste Sensorfeld 2.1, das zweite Sensorfeld 2.2, das dritte Sensorfeld 2.3 und das weitere Sensorfeld 2.4 in einer Ebene (x,y-Ebene) liegen.

Die Code-Teilungen der Teilungsspuren 1.1, 1.2, 1.3, 1.4 in Fig. 8 sind vereinfacht und daher lediglich schmatisch dargestellt.

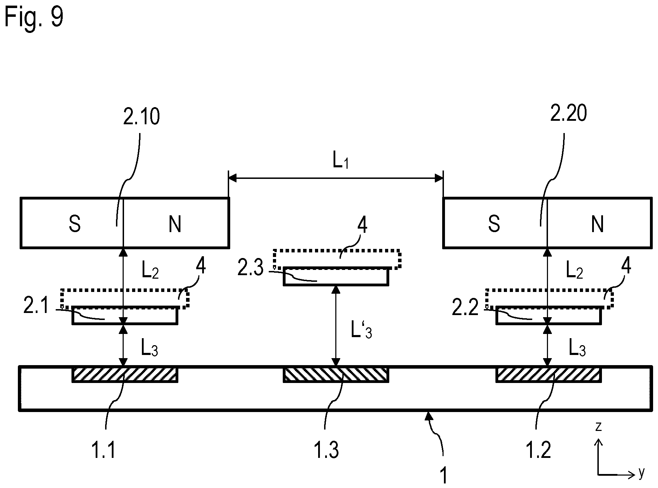

Gemäß einer dritten Ausführungsform in Fig. 9 können die Sensorfelder 2.1, 2.2 in der dritten Richtung z relativ zueinander angeordnet sein, sodass das erste Sensorfeld 2.1 zwischen der ersten Teilungsspur 1.1 sowie dem ersten Permanentmagneten 2.10 angeordnet ist, und das zweite Sensorfeld 2.2 zwischen der zweiten Teilungsspur 1.2 und dem zweiten Permanentmagneten 2.20 angeordnet ist, wobei das erste und zweite Sensorfeld 2.1, 2.2 in einer Ebene (x,y-Ebene) liegen. Die Sensorfelder 2.1, 2.2, 2.3 sind als magnetsensitive Strukturen ausgebildet, wobei für jedes Sensorfeld 2.1, 2.2, 2.3 ein eigenes flächiges Substrat 4 genutzt wurde. Alternativ kann für das erste und zweite Sensorfeld 2.1, 2.2 auch das gleiche Substrat 4 vorgesehen sein, welches sich dann flächig in einer Ebene (x,y-Ebene) erstreckt (nicht dargestellt).

Zwischen der ersten Teilungsspur 1.1 und dem ersten Sensorfeld 2.1 und ergänzend oder alternativ zwischen der zweiten Teilungsspur 1.2 und dem zweiten Sensorfeld 2.2 bildet sich ein dritter Luftspalt L₃ aus. Das dritte Sensorfeld 2.3 ist in der dritten Richtung z versetzt zur dritten Teilungsspur 1.3 angeordnet, ist dabei aber nicht in einer Ebene (x,y-Ebene) mit dem ersten und zweiten Sensorfeld 2.1, 2.2. Zwischen der dritten Teilungsspur 1.3 und dem dritten Sensorfeld 2.3 bildet sich dabei der dritte Luftspalt L'₃ aus. Mit Vorteil ist das dritte Sensorfeld 2.3 derart angeordnet, dass dieses in einem homogenen Bereich wenigstens einer Ebene der ersten und zweiten Richtung x, y (x,y-Ebenen) des Magnetfelds B zwischen dem ersten und zweiten Permanentmagneten 2.10, 2.20 mit Richtungsvektor in die zweite Richtung y (y-Richtung) liegt.

## Patentansprüche

1. Positionsmesseinrichtung umfassend ein Detektionselement (2) und ein relativ zum Detektionselement (2) entlang einer ersten Richtung (x) bewegbares Skalenelement (1), wobei
das Skalenelement (1), eine erste Teilungsspur (1.1) und eine zweite Teilungsspur (1.2) aufweist, welche beide absolut ausgebildet sind sowie eine dritte Teilungsspur (1.3) aufweist, welche inkrementell ausgebildet ist, wobei die drei Teilungsspuren (1.1; 1.2; 1.3) zueinander parallel und in einer zweiten Richtung (y) beabstandet angeordnet sind, wobei die zweite Richtung (y) orthogonal zur ersten Richtung (x) orientiert ist und
das Detektionselement (2) ein erstes Sensorfeld (2.1) umfasst, welches in einer dritten Richtung (z) gegenüber der ersten Teilungsspur (1.1) angeordnet ist, ein zweites Sensorfeld (2.2) umfasst, welches in der dritten Richtung (z) gegenüber der zweiten Teilungsspur (1.2) angeordnet ist und ein drittes Sensorfeld (2.3) umfasst, welches in der dritten Richtung (z) gegenüber der dritten Teilungsspur (1.3) angeordnet ist, wobei die dritte Richtung (z) orthogonal zur zweiten Richtung (y) und orthogonal zur ersten Richtung (x) orientiert ist, und die magnetsensitiven Sensorfelder (2.1; 2.2; 2.3) so ausgestaltet sind, dass durch diese die magnetisch ausgebildeten Teilungsspuren (1.1; 1.2; 1.3) abtastbar sind, wobei
das Detektionselement (2) zusätzlich umfasst:
einen ersten Permanentmagneten (2.10), welcher gegenüber dem ersten Sensorfeld (2.1) in der dritten Richtung (z) versetzt angeordnet ist und
einen zweiten Permanentmagneten (2.20), welcher gegenüber dem zweiten Sensorfeld (2.2) in der dritten Richtung (z) versetzt angeordnet ist, wobei sich ein erster Luftspalt (L₁) in der zweiten Richtung (y) zwischen dem ersten und zweiten Permanentmagneten befindet.

2. Positionsmesseinrichtung gemäß Anspruch 1, wobei die dritte Teilungsspur (1.3) zwischen der ersten Teilungsspur (1.1) und der zweiten Teilungsspur (1.2) angeordnet ist.

3. Positionsmesseinrichtung gemäß einem der vorhergehenden Ansprüche, wobei die Magnetisierungsrichtung der beiden Permanentmagnete (2.10; 2.20) identisch ist.

4. Positionsmesseinrichtung gemäß einem der vorhergehenden Ansprüche, wobei die Längskanten (X_{S}) der Sensorfelder (1.1; 1.2; 1.3) eine Richtungskomponente parallel zur ersten Richtung (x) und/oder die Polausrichtung der Permanentmagnete (2.10; 2.20) eine Richtungskomponente senkrecht zur ersten Richtung (x) aufweisen.

5. Positionsmesseinrichtung gemäß einem der vorhergehenden Ansprüche, wobei der erste Permanentmagnet (2.10) derart zur ersten Teilungsspur (1.1) in der dritten Richtung (z) versetzt angeordnet ist, dass das erste Sensorfeld (2.1) zwischen der ersten Teilungsspur (1.1) und dem ersten Permanentmagnet (2.20) liegt und/oder der zweite Permanentmagnet (2.20) derart zur zweiten Teilungsspur (1.2) in der dritten Richtung (z) versetzt angeordnet ist, dass das zweite Sensorfeld (2.2) zwischen der zweiten Teilungsspur (1.2) und dem zweiten Permanentmagnet (2.20) liegt.

6. Positionsmesseinrichtung gemäß einem der vorhergehenden Ansprüche, wobei zwischen dem ersten Permanentmagnet (2.10) und dem ersten Sensorfeld (2.1) in der dritten Richtung (z) ein zweiter Luftspalt (L₂) ausgebildet ist und/oder zwischen dem zweiten Permanentmagnet (2.20) und dem zweiten Sensorfeld (2.2) in der dritten Richtung (z) ein zweiter Luftspalt (L₂) ausgebildet ist.

7. Positionsmesseinrichtung gemäß einem der vorhergehenden Ansprüche, wobei der erste Permanentmagnet (2.10) auf der Rückseite des ersten Sensorfelds (2.1) angeordnet ist und/oder der zweite Permanentmagnet (2.20) auf der Rückseite des zweiten Sensorfelds (2.2) angeordnet ist.

8. Positionsmesseinrichtung gemäß einem der vorhergehenden Ansprüche, wobei wenigstens einer der beiden Permanentmagnete (2.10; 2.20) als Stabmagnet ausgebildet ist.

9. Positionsmesseinrichtung gemäß einem der vorhergehenden Ansprüche, wobei die beiden Permanentmagnete (2.10; 2.20) derart in Länge (X_{PM}), Breite (Y_{PM}) und Höhe (Z_{PM}) dimensioniert sind, und/oder der erste Luftspalt (L₁) derart in der zweiten Richtung (y) dimensioniert ist, und/oder der zweite Luftspalt (L₂) derart in der dritten Richtung (z) dimensioniert ist, dass wenigstens im Bereich der Sensorfelder (2.1; 2.2; 2.3) das Magnetfeld (B) wenigstens gemäß der zweite Richtung (y-Richtung) homogen ausgebildet ist.

10. Positionsmesseinrichtung gemäß einem der vorhergehenden Ansprüche, wobei der erste Permanentmagnet (2.10) so dimensioniert ist, dass dieser über die Abmessungen des ersten Sensorfelds (1.1) ragt und/oder der zweite Permanentmagnet (2.20) so dimensioniert ist, dass dieser über die Abmessungen des zweiten Sensorfelds (2.20) ragt.

11. Positionsmesseinrichtung gemäß Anspruch 10, wobei der erste Permanentmagnet (2.10) so dimensioniert ist, dass nur dessen Abmessung in der zweiten Richtung (y) größer als die Abmessung des ersten Sensorfelds (1.1) in der zweiten Richtung (y) ist und/oder der zweite Permanentmagnet (2.20) so dimensioniert ist, dass nur dessen Abmessung in der zweiten Richtung (y) größer als die Abmessung des zweiten Sensorfelds (1.2) in der zweiten Richtung (y) ist.

12. Positionsmesseinrichtung gemäß einem der vorhergehenden Ansprüche, wobei die beiden Permanentmagnete (2.10; 2.20) geometrisch identisch ausgebildet sind.

13. Positionsmesseinrichtung gemäß einem der vorhergehenden Ansprüche, wobei die beiden Permanentmagnete (2.10; 2.20) ein identisches Energieprodukt aufweisen.

14. Positionsmesseinrichtung gemäß einem der vorhergehenden Ansprüche, wobei die Abmessung des ersten Luftspalts (L₁) in der zweiten Richtung (y) wenigstens der Abmessung des dritten Sensorfelds (2.3) in der zweiten Richtung (y) entspricht.

15. Positionsmesseinrichtung gemäß einem der vorhergehenden Ansprüche, wobei das Skalenelement (1) wenigstens eine weitere Teilungsspur (1.4) aufweist, welche inkrementell ausgebildet ist und zwischen der ersten Teilungsspur (1.1) und der zweiten Teilungsspur (1.2) angeordnet ist, wobei in der dritten Richtung (z) gegenüber der wenigstens einen weiteren Teilungsspur (1.4) wenigstens ein weiteres Sensorfeld (2.4) angeordnet ist.

## Claims

1. Position measuring device comprising a detection element (2) and a scale element (1) which is movable relative to the detection element (2) along a first direction (x), wherein
the scale element (1) has a first graduation track (1.1) and a second graduation track (12), both of which are designed for absolute values, and a third graduation track (1.3), which is designed for incremental values, wherein the three graduation tracks (1.1; 1.2; 1.3) are arranged parallel to each other and spaced apart from each other in a second direction (y), wherein the second direction (y) is oriented orthogonally to the first direction (x), and
the detection element (2) comprises a first sensor array (2.1) which is arranged opposite the first graduation track (1.1) in a third direction (z), comprises a second sensor array (2.2) which is arranged opposite the second graduation track (1.2) in the third direction (z), and comprises a third sensor array (2.3) which is arranged opposite the third graduation track (1.3) in the third direction (z), wherein the third direction (z) is oriented orthogonally to the second direction (y) and orthogonally to the first direction (x), and the magnet-sensitive sensor arrays (2.1; 2.2; 2.3) are configured such that the magnetic graduation tracks (1.1; 1.2; 1.3) can be scanned by these magnet-sensitive sensor arrays, wherein
the detection element (2) additionally comprises:
a first permanent magnet (2.10), which is arranged offset in the third direction (z) with respect to the first sensor array (2.1), and
a second permanent magnet (2.20), which is arranged offset in the third direction (z) with respect to the second sensor array (2.2), wherein a first air gap (L₁) is located between the first and the second permanent magnet in the second direction (y).

2. Position measuring device according to Claim 1, wherein the third graduation track (1.3) is arranged between the first graduation track (1.1) and the second graduation track (1.2).

3. Position measuring device according to either of the preceding claims, wherein the magnetization direction of the two permanent magnets (2.10; 2.20) is identical.

4. Position measuring device according to any of the preceding claims, wherein the longitudinal edges (X_{S}) of the sensor arrays (1.1; 1.2; 1.3) have a directional component parallel to the first direction (x) and/or the pole orientation of the permanent magnets (2.10; 2.20) has a directional component perpendicular to the first direction (x).

5. Position measuring device according to any of the preceding claims, wherein the first permanent magnet (2.10) is arranged offset in the third direction (z) with respect to the first graduation track (1.1) in such a way that the first sensor array (2.1) lies between the first graduation track (1.1) and the first permanent magnet (2.20), and/or the second permanent magnet (2.20) is arranged offset in the third direction (z) with respect to the second graduation track (1.2) in such a way that the second sensor array (2.2) lies between the second graduation track (1.2) and the second permanent magnet (2.20).

6. Position measuring device according to any of the preceding claims, wherein a second air gap (L₂) is formed between the first permanent magnet (2.10) and the first sensor array (2.1) in the third direction (z), and/or a second air gap (L₂) is formed between the second permanent magnet (2.20) and the second sensor array (2.2) in the third direction (z).

7. Position measuring device according to any of the preceding claims, wherein the first permanent magnet (2.10) is arranged on the rear side of the first sensor array (2.1), and/or the second permanent magnet (2.20) is arranged on the rear side of the second sensor array (2.2).

8. Position measuring device according to any of the preceding claims, wherein at least one of the two permanent magnets (2.10; 2.20) is in the form of a bar magnet.

9. Position measuring device according to any of the preceding claims, wherein the two permanent magnets (2.10; 2.20) are dimensioned in length (X_{PM}), width (Y_{PM}) and height (Z_{PM}) in such a way and/or the first air gap (L₁) is dimensioned in the second direction (y) in such a way and/or the second air gap (L₂) is dimensioned in the third direction (z) in such a way that the magnetic field (B) is homogeneous at least according to the second direction (y direction) at least in the region of the sensor arrays (2.1; 2.2; 2.3).

10. Position measuring device according to any of the preceding claims, wherein the first permanent magnet (2.10) is dimensioned such that it exceeds the dimensions of the first sensor array (1.1), and/or the second permanent magnet (2.20) is dimensioned such that it exceeds the dimensions of the second sensor array (2.20).

11. Position measuring device according to Claim 10, wherein the first permanent magnet (2.10) is dimensioned such that only the dimension of the first permanent magnet in the second direction (y) is greater than the dimension of the first sensor array (1.1) in the second direction (y), and/or the second permanent magnet (2.20) is dimensioned such that only the dimension of the second permanent magnet in the second direction (y) is greater than the dimension of the second sensor array (1.2) in the second direction (y).

12. Position measuring device according to any of the preceding claims, wherein the two permanent magnets (2.10; 2.20) are geometrically identical.

13. Position measuring device according to any of the preceding claims, wherein the two permanent magnets (2.10; 2.20) have an identical energy product.

14. Position measuring device according to any of the preceding claims, wherein the dimension of the first air gap (L₁) in the second direction (y) corresponds at least to the dimension of the third sensor array (2.3) in the second direction (y).

15. Position measuring device according to any of the preceding claims, wherein the scale element (1) has at least one further graduation track (1.4), which is designed for incremental values and is arranged between the first graduation track (1.1) and the second graduation track (1.2), wherein at least one further sensor array (2.4) is arranged opposite the at least one further graduation track (1.4) in the third direction (z).

## Revendications

1. Dispositif de mesure de position comprenant un élément de détection (2) et un élément d'échelle (1) mobile dans une première direction (x) par rapport à l'élément de détection (2),
l'élément d'échelle (1) comportant une première piste de graduation (1.1) et une deuxième piste de graduation (1.2), qui sont toutes les deux absolues, et une troisième piste de graduation (1.3), qui est incrémentale, les trois pistes de graduation (1.1 ; 1.2 ; 1.3) étant parallèles entre elles et espacées dans une deuxième direction (y), la deuxième direction (y) étant orientée orthogonalement à la première direction (x) et
l'élément de détection (2) comprenant un premier champ de capteur (2.1) qui est disposé dans une troisième direction (z) par rapport à la première piste de graduation (1.1), un deuxième champ de capteur (2.2) qui est disposé dans la troisième direction (z) par rapport à la deuxième piste de graduation (1.2) et un troisième champ de capteur (2.3) qui est disposé dans la troisième direction (z) par rapport à la troisième piste de graduation (1.3), la troisième direction (z) étant orientée orthogonalement à la deuxième direction (y) et orthogonalement à la première direction (x), et les champs de capteurs magnéto-sensibles (2.1 ; 2.2 ; 2.3) étant conçus de telle sorte que les pistes de graduation formées magnétiquement (1.1; 1.2 ; 1.3) puissent être balayées par ceux-ci,
l'élément de détection (2) comprenant en outre :
un premier aimant permanent (2.10) qui est disposé de manière décalée dans la troisième direction (z) par rapport au premier champ de capteur (2.1) et
un deuxième aimant permanent (2.20) qui est disposé de manière décalée dans la troisième direction (z) par rapport au deuxième champ de capteur (2.2), un premier entrefer (L₁) étant situé entre les premier et deuxième aimants permanents dans la deuxième direction (y).

2. Dispositif de mesure de position selon la revendication 1, la troisième piste de graduation (1.3) étant disposée entre la première piste de graduation (1.1) et la deuxième piste de graduation (1.2).

3. Dispositif de mesure de position selon l'une des revendications précédentes, la direction de magnétisation des deux aimants permanents (2.10 ; 2.20) étant identique.

4. Dispositif de mesure de position selon l'une des revendications précédentes, les bords longitudinaux (X_{S}) des champs de capteurs (1.1 ; 1.2 ; 1.3) comportant une composante directionnelle parallèle à la première direction (x) et/ou la direction polaire des aimants permanents (2.10 ; 2.20) comportant une composante directionnelle perpendiculaire vers la première direction (x).

5. Dispositif de mesure de position selon l'une des revendications précédentes, le premier aimant permanent (2.10) étant disposé de manière décalée dans la troisième direction (z) par rapport à la première piste de graduation (1.1) de manière à ce que le premier champ de capteur (2.1) soit situé entre la première piste de graduation (1.1) et le premier aimant permanent (2.20) et/ou le deuxième aimant permanent (2.20) étant disposé de manière décalée dans la troisième direction (z) par rapport à la deuxième piste de graduation (1.2) de manière à ce que le deuxième champ de capteur (2.2) soit situé entre la deuxième piste de graduation (1.2) et le deuxième aimant permanent (2.20).

6. Dispositif de mesure de position selon l'une des revendications précédentes, un deuxième entrefer (L₂) étant formé dans la troisième direction (z) entre le premier aimant permanent (2.10) et le premier champ de capteur (2.1) et/ou un deuxième entrefer (L₂) étant formé dans la troisième direction (z) entre le deuxième aimant permanent (2.20) et le deuxième champ de capteur (2.2).

7. Dispositif de mesure de position selon l'une des revendications précédentes, le premier aimant permanent (2.10) étant disposé au dos du premier champ de capteur (2.1) et/ou le deuxième aimant permanent (2.20) étant disposé au dos du deuxième champ de capteur (2.2).

8. Dispositif de mesure de position selon l'une des revendications précédentes, au moins un des deux aimants permanents (2.10 ; 2.20) étant conçu sous la forme d'un barreau magnétique.

9. Dispositif de mesure de position selon l'une des revendications précédentes, les deux aimants permanents (2.10 ; 2.20) étant dimensionnés en termes de longueur (X_{PM}), de largeur (Y_{PM}) et de hauteur (Z_{PM}), et/ou le premier entrefer (Li) étant dimensionné dans la deuxième direction (y), et/ou le deuxième entrefer (L₂) étant dimensionné dans la troisième direction (z) de manière à ce que, au moins dans la zone des champs de capteurs (2.1 ; 2.2 ; 2.3), le champ magnétique (B) soit formé de manière homogène au moins suivant la deuxième direction (direction y).

10. Dispositif de mesure de position selon l'une des revendications précédentes, le premier aimant permanent (2.10) étant dimensionné de manière à dépasser des dimensions du premier champ de capteur (1.1) et/ou le deuxième aimant permanent (2.20) étant dimensionné de manière à dépasser des dimensions du deuxième champ de capteur (2.20).

11. Dispositif de mesure de position selon la revendication 10, le premier aimant permanent (2.10) étant dimensionné de telle sorte que seule sa dimension dans la deuxième direction (y) soit plus grande que la dimension du premier champ de capteur (1.1) dans la deuxième direction (y) et/ou le deuxième aimant permanent (2.20) étant dimensionné de telle sorte que seule sa dimension dans la deuxième direction (y) soit plus grande que la dimension du deuxième champ de capteur (1.2) dans la deuxième direction (y).

12. Dispositif de mesure de position selon l'une des revendications précédentes, les deux aimants permanents (2.10 ; 2.20) étant géométriquement identiques.

13. Dispositif de mesure de position selon l'une des revendications précédentes, les deux aimants permanents (2.10 ; 2.20) ayant un produit énergétique identique.

14. Dispositif de mesure de position selon l'une des revendications précédentes, la dimension du premier entrefer (L₁) dans la deuxième direction (y) correspondant au moins à la dimension du troisième champ de capteur (2.3) dans la deuxième direction (y).

15. Dispositif de mesure de position selon l'une des revendications précédentes, l'élément d'échelle (1) comportant au moins une autre piste de graduation (1.4), qui est conçue de manière incrémentale et qui est disposée entre la première piste de graduation (1.1) et la deuxième piste de graduation (1.2), au moins un autre champ de capteur (2.4) étant disposé dans la troisième direction (z) par rapport à l'au moins une autre piste de graduation (1.4).
